# FASCICULE DE BREVET EUROPEEN

(11) **EP 0 462 894 B1**
(45) Date de publication et mention de la délivrance du brevet: **22.02.1995**
(21) Numéro de dépôt: 91401645.6
(22) Date de dépôt: 18.06.1991
(51) Int. Cl.: B01D 24/10

(54) **Dispositif d'évacuation de l'eau de lavage des filtres à matériau granulaire lavés simultanément à l'eau et à l'air**
Vorrichtung zum Abführen des Waschwassers aus einem Filter mit körnigem Filtermaterial und gleichzeitigem Waschen mit Wasser und Luft
Device for evacuating washing water from a filter filled with granular material and washed with a water-air mixture

(30) Priorité: 20.06.1990 FR 9007718
(43) Date de publication de la demande: 27.12.1991
(73) Titulaire: DEGREMONT, 92508 Rueil-Malmaison Cédex (FR)
(72) Inventeur: Savall, Vincent, F-78140 Velizy Villacoublay (FR); Gaudin, Marie-Pierre, F-78100 Saint-Germain en Laye (FR)
(74) Mandataire: Armengaud Ainé, Alain

(56) Documents cités:
- DE-A- 2 059 261
- DE-B- 1 033 183
- DE-C- 634 966
- US-A- 2 453 345

## Description

La présente invention concerne un dispositif destiné à effectuer l'évacuation de l'eau de lavage des filtres à matériau filtrant granulaire et la récupération des particules de matériau granulaire entraînées avec l'eau pendant le lavage.

Le lavage des filtres à matériau filtrant granulaire, qui devient nécessaire au bout d'un certain temps de fonctionnement, plus ou moins long, du filtre, est classiquement effectué par retour de fluides de lavage. Plusieurs modes de lavage sont connus, à savoir retour d'eau seule ou brassage de la masse filtrante à l'air seul et rinçage à l'eau sans air, ou lavage combiné à l'air et à l'eau injectés simultanément dans la masse. Ce dernier type de lavage est particulièrement avantageux parce qu'il met en oeuvre des énergies d'agitation plus importantes et des temps de lavage réduits. Il est utilisé depuis longtemps pour laver les filtres à sable. Son efficacité n'est aujourd'hui plus à démontrer. Cependant, jusqu'à présent, le lavage combiné à l'air et à l'eau (ou lavage hydropneumatique) ne pouvait aisément être appliqué au lavage des filtres à matériaux légers ou des filtres multicouches. En effet, les matériaux légers, tels que l'anthracite, ont une masse volumique faible de l'ordre de 1.500 Kg/m³. Il se produit alors, pendant la phase de décolmatage à l'eau et à l'air un phénomène de flottation des particules de matériau filtrant ; lorsque le niveau de l'émulsion eau-air atteint le déversoir de la goulotte de reprise des eaux de lavage, une fraction importante de la masse filtrante est alors entraînée à l'égout.

Pour l'éviter, une technique connue consiste à relever de façon importante le niveau du déversoir de reprise des eaux de lavage de manière à ce que le matériau entraîné ait le temps de décanter avant le déversement à l'égout. Cette solution présente les inconvénients immédiats d'augmenter considérablement la hauteur des ouvrages ainsi que la durée et les volumes d'eau nécessaires.

On a déjà proposé diverses solutions au problème, très général, de la reprise et de l'évacuation de l'eau ayant servi au lavage du matériau filtrant granulaire des filtres du genre considéré, quel que soit leur type, en particulier lorsque la masse filtrante est constituée de matériau de faible densité, sans que la reprise et l'évacuation de cette eau s'accompagne d'un entraînement intempestif du matériau.

L'une de ces solutions (US-A-4.479.880) consiste à équiper les goulottes de reprise d'eau de lavage de systèmes déviant les courants ascendants d'air et d'eau. Les courants ainsi défléchis arrivent au droit de plaques comportant une partie horizontale perforée et une partie inclinée.

Le matériau entraîné se sépare, au-dessus de la plaques perforée, des bulles d'air auxquelles il est attaché et décante vers le lit filtrant dans la zone délimitée par la partie inclinée de la plaque.

Cette solution présente de nombreux inconvénients dont les principaux sont les suivants :
L'air, défléchi dans le premier temps, remonte le long des plaques inclinées et traverse la plaque perforée en provoquant un barrage à l'écoulement vers le déversoir de la goulotte et en empêchant le matériau de décanter vers le lit filtrant. La zone dite de décantation est alors mise en turbulence et l'effet de décantation du matériau devient impossible. Au contraire, les particules de matériau séparées de l'air sont à nouveau entraînées dans cette turbulence vers le déversoir.

Une autre solution connue (US-A-4.478.726) consiste en un dispositif constitué par une plaque horizontale placée au droit du déversoir d'une goulotte de reprise des eaux de lavage. L'eau et l'air ascendant sont, dans ces conditions, déviés par la plaque au droit du déversoir. Le matériau se détache des bulles d'air à l'extrémité de la plaque, puis décante sur sa partie horizontale et revient à l'intérieur du filtre par l'intermédiaire d'un espace ménagé au droit du déversoir.

Les inconvénients les plus importants d'un tel dispositif sont les suivants :
- l'air qui s'évacue à l'extrémité de la plaque, provoque, comme dans la solution précédente, un barrage à l'écoulement vers le déversoir et surtout une forte turbulence dans la zone où devrait se faire la décantation des particules de matériau tendant à les remettre en suspension ;
- de plus, la plaque horizontale délimite une zone de décantation qui doit être très importante car les vitesses de décantation des matériaux filtrants utilisés sont faibles et les particules sont entraînées par le flux de déversement. Pour que la décantation ait lieu, il faut que la plaque ait des dimensions très importantes ;
- l'air accumulé sous la plaque ne peut pas être évacué. Cette quantité d'air, de plus en plus importante au cours du lavage, empêche la recirculation des particules de matériau vers le lit filtrant. Il se produit alors une accumulation de matériau au droit du déversoir et le matériau est alors entraîné au déversoir et de là à l'égout ;
- lors de l'arrêt du lavage air et eau, une quantité importante de matériau reste sur la plaque sans retour possible vers la masse filtrante. Ce matériau ne peut alors être évacué que par l'installation complémentaire de dispositifs de rinçage ou de balayage compliqués ou coûteux.

Encore une autre solution (US-A-4.076.625) consiste en un dispositif équipant des goulottes de reprise en eau de lavage, sous la forme de baffles symétriques servant de déflecteurs à l'écoulement de l'air et de l'eau.

Si, grâce à ce dispositif, il ne se produit pas d'accumulation de matériau granulaire, ce dispositif offre néanmoins un inconvénient majeur lors de la phase de rinçage. En effet, l'eau de rinçage destinée à évacuer hors du filtre le résultat du décolmatage à l'air et à l'eau est, elle aussi, défléchie par les baffles. L'écoulement ne peut se faire qu'entre les baffles pour se déverser dans la goulotte de reprise des eaux. La quantité d'eau de rinçage accumulée pendant le décolmatage entre les dispositifs équipant chaque goulotte représente un volume important d'eau quine pourra pas être rincée, ou tout au moins le sera au prix d'une durée très importante de rinçage. De plus, l'écoulement dans l'espace ménagé entre les baffles servant de déflecteurs est à contre courant du fluide et du matériau. Le dimensionnement de ces organes déflecteurs conduit à des dispositifs de grand encombrement qui nécessitent au-dessus du matériau des hauteurs très importantes d'eau.

Enfin, un tel système ne peut pas équiper les filtres à déversoir unique longitudinal.

Une dernière solution connue (FR-A-2580515) possible porte sur un dispositif utilisant une pluralité de plaques verticales, ou plats, régulièrement espacées, disposées en quinconce et situées en amont d'une zone de décantation.

Les particules de matériau séparées des bulles d'air lors de leur passage entre les plats décantent dans une zone "tranquillisée" et retournent vers le lit filtrant par l'intermédiaire d'un espace calibré, ménagé sous les plats.

L'eau de lavage se déverse alors après la zone de décantation dans une goulotte de reprise.

Cette solution est applicable aux matériaux de masse volumique de l'ordre de 1.700 Kg/m³. Mais, pour des matériaux de masse volumique de l'ordre de, ou inférieur à 1.500 Kg/m3 et dont la vitesse de décantation est de l'ordre de 50 m/h, la zone de décantation à prévoir devrait avoir des dimensions très importantes, donc pénalisantes pour le coût de l'ouvrage.

Enfin DE-B- 1 033183 décrit un dispositif de lavage de filtres à matériau filtrant granulaire, lavés simultanément à l'air et à l'eau, qui comprend : un organe calibré de collecte et d'évacuation de l'eau sale ; des cloisons internes et externes placées de part et d'autre de l'organe de collecte, délimitant à l'intérieur des cloisons internes une zone de récupération de l'eau, et entre les cloisons internes et externes, des zones de tranquillisation de l'écoulement favorisant la séparation, par décantation à co-courant descendant, des particules de matériau granulaire et de l'eau sale à évacuer, et un déflecteur destiné à éviter la perturbation des zones précédentes par le mélange triphasique eau-air-matériau granulaire formé au cours du lavage, placé sous lesdites zones.

Ce dispositif connu présente l'inconvénient de ne pas réaliser une décantation complète des particules du matériau granulaire, une partie importante de celle-ci, portée par des bulles d'air étant entrainée directement vers l'évacuation, et, en outre, des particules décantées s'accumulent entre les cloisons internes.

Partant de cet état de la technique, l'invention apporte un dispositif qui est caractérisé en ce que les cloisons internes délimitent une chambre d'évacuation de l'eau sale issue du lavage du filtre, ouverte à sa partie inférieure pour le passage de l'eau sale après décantation, en vue de sa récupération pour son évacuation, et en ce que ledit déflecteur est positionné en dessous et en regard de l'ouverture délimitée entre lesdites cloisons internes.

On a décrit ci-après des mises en oeuvre de ce dispositif, à titre d'exemple non limitatif, en référence aux dessins annéxés sur lesquels :
- la figure 1 est une vue partielle en coupe d'un mode de réalisation de l'invention,
- la figure 2 est une vue partielle, en perspective, de ce même mode de réalisation,
- la figure 3 est une vue partielle en coupe d'un deuxième mode de réalisation,
- la figure 4 est une vue partielle en coupe d'un troisième mode de réalisation de l'invention.

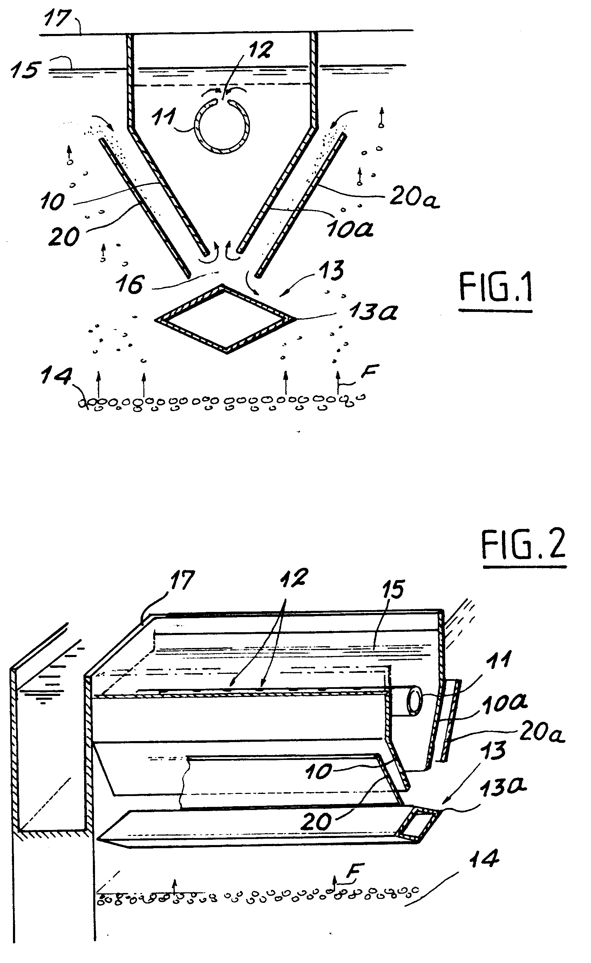

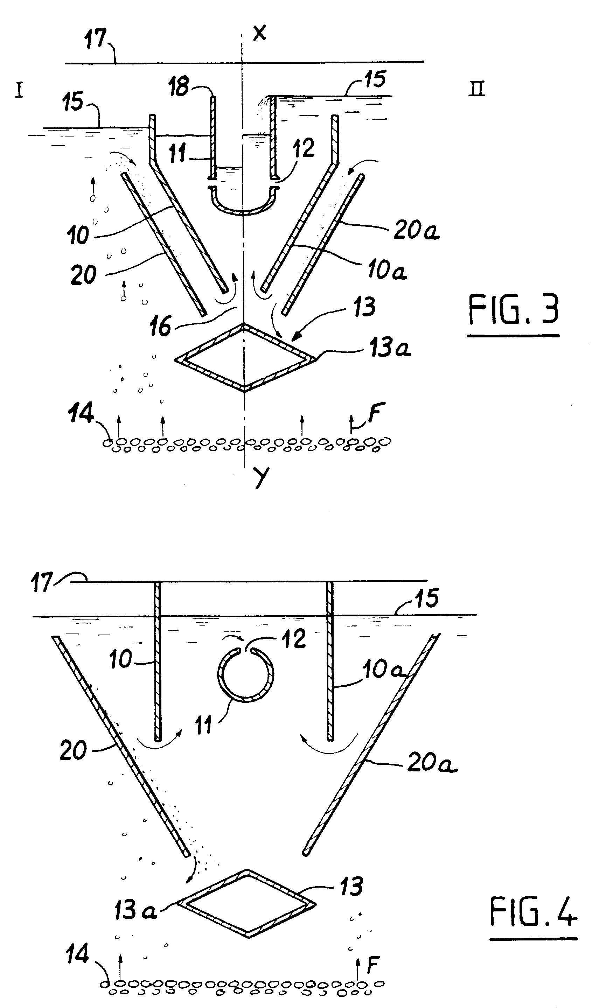

Conformément à l'invention et suivant l'une de ses caractéristiques, l'organe 11 de reprise de l'eau de lavage consiste en un tube (Figures 1, 2 et 4) muni de trous calibrés tels que 12, pour la raison que l'on verra plus loin. Cet organe 11 pourrait aussi bien et conformément à l'invention, être constitué d'une goulotte ouverte à sa partie supérieure (Figure 3) , les orifices calibrés (12) étant alors ménagés à sa partie inférieure, les bords 18 de la goulotte étant à un niveau plus élevé que les cloisons internes et externes.

Le dispositif suivant l'invention comporte deux cloisons internes séparatrices 10 et 10a, constituées chacune, soit d'une partie verticale et d'une partie oblique dans les deux premiers modes de réalisation proposés à titre d'exemples (Figures 1, 2 et 3), soit d'une seule partie verticale dans le troisième mode de réalisation (Figure 4), disposées symétriquement de part et d'autre du plan vertical passant par l'axe de l'organe de collecte 11, les parties obliques, formant entre elles un angle convergent dans les deux premiers modes de réalisation, délimitant ainsi entre elles une zone tranquille.

Le dispositif suivant l'invention comporte également deux cloisons externes tranquillisatrices 20 et 20a, extérieures aux précédentes, parallèles aux parties obliques des cloisons 10 et 10a dans les deux premiers modes de réalisation, obliques et convergentes dans le troisième mode de réalisation, les espaces ainsi formés entre les cloisons 10 et 20 d'une part, 10a et 20a d'autre part, constituant des zones d'écoulement tranquillisé favorisant la séparation à co-courant descendant du matériau granulaire et de l'eau sale. Ces zones peuvent comporter des cloisons constituées par des tubes, lames, nids d'abeille ou tout autre dispositif analogue, non représenté sur les figures et destiné à réduire encore le diamètre hydraulique, et par conséquent la turbulence.

Au-dessous du débouché de ces zones tranquilles, est disposé un déflecteur, constitué par exemple par un tube 13, à section polygonale, disposé de façon à ce que ses arêtes 13a dévient les courants ascendants de mélange triphasique vers l'extérieur des zones tranquilles.

Le dispositif fonctionne de la façon suivante :
Alors que la filtration dans le lit filtrant constitué de matériau filtrant granulaire 14 a lieu de haut en bas, le lavage du matériau s'effectue de bas en haut comme le montrent les flèches F.

Le mélane triphasique constitué par les fluides de lavage air et eau et par les particules de matériau granulaire arrachées à la masse filtrante pendant le lavage, rencontre le déflecteur 13 et dans ces conditions les bulles d'air se trouvent déviées vers la surface 15 de l'eau dans l'appareil filtrant, à l'extérieur des cloisons 20, 20a.

Les particules de matériau granulaire que ces bulles ont entraînées viennent ensuite, avec l'eau qui les véhicule, dans les zones de séparation à co-courant descendant ménagées entre les cloisons 10/20 et 10a/20a, d'où elles sortent, décantées, dans une zone 16 non perturbée, ce qui favorise la restitution vers le lit filtrant des particules de matériau séparées de l'eau, cette dernière s'écoulant alors vers l'organe 11 de reprise.

L'utilisation, conformément à l'invention, comme organe de reprise de l'eau ayant servi au lavage, d'un tube à orifices calibrés présente des effets techniques particulièrement bénéfiques.

En effet, après le lavage à l'air et à l'eau, la phase de rinçage des tranches d'eaux sales accumulées au-dessus du lit filtrant se trouve ainsi facilitée.

Lorsque le rinçage à l'eau seule s'effectue, le débit d'eau injectée augmente, la perte de charge dans les trous se trouve alors augmentée et le niveau d'eau 15 monte dans le filtre. Dans le premier et le troisième modes de réalisation (Figures 1, 2 et 4), il atteint un déversoir général 17, disposé sur un côté de l'ouvrage, de préférence perpendiculairement aux tubes. La plus grande partie de l'eau chargée s'évacue alors librement et directement tout au long du déversoir, en ne transitant que partiellement par les zones de séparation, c'est-à-dire sans aucun accroissement des temps de lavage ou des débits qui caractérisent les procédés et dispositifs utilisés jusqu'à présent.

Dans le deuxième mode de réalisation (figure 3), le niveau d'eau 15 atteint les bords supérieurs 18 de la goulotte qui sert ainsi de déversoir. On obtient donc, pendant la phase de rinçage, une longueur de déversoir égale au double de la longueur des goulottes, ce qui réduit encore le temps de rinçage et les distorsions d'écoulement hydraulique.

Pour expliciter ce mode de fonctionnement, on a tracé un plan de coupe dans l'axe X,Y de la figure 3 et représenté, à gauche (I) les niveaux d'eau en période de lavage, et à droite (II) ces niveaux en période de rinçage.

D'une façon générale, l'invention présente, par rapport aux dispositions connues, des avantages remarquables.

L'utilisation de zones de séparation a pour conséquence que l'ensemble du dispositif présente des dimensions comparables aux goulottes classiques de reprise des eaux des filtres à matériaux granulaires, par exemple 200 x 400 mm. L'encombrement est donc réduit, le dispositif ne nécessite aucune augmentation de la hauteur des ouvrages, de la durée ou du débit d'eau de lavage. Il en découle qu'il peut parfaitement et facilement s'adapter à des ouvrages existants ; par exemple, à des filtres à matériau léger quine pouvaient pas être lavés simultanément à l'air et à l'eau.

Les paramètres tels que l'angle d'inclinaison des cloisons sur le plan vertical médian et leur écartement peuvent être ajustés pour s'appliquer à n'importe quel système triphasique, selon l'espace et les possibilités dont on dispose.

Ce qui suit est un exemple de réalisation de l'invention, appliqué au cas d'un filtre d'une surface de 4 m² dont le matériau filtrant granulaire a une masse volumique de l'ordre de 1.500 Kg/m³ et une vitesse de décantation de 70 m/h. Ce filtre est lavé à l'air et à l'eau avec des débits respectifs de 60 m³/h/m² de filtre et 5 m³/h/m² de filtre puis rincé à l'eau seule au débit de 20 m³/h/m² de filtre. Chaque décanteur est constitué de plaques inclinées de 200 mm de longueur faisant avec la verticale un angle de 45° et espacées entre elles de 5 cm. Le tube de collecte de l'eau de lavage et de rinçage a un diamètre de 60 mm percé de trous de 20 mm de diamètre régulièrement espacés tous les 100 mm.

## Revendications

1. Dispositif destiné à effectuer l'évacuation de l'eau de lavage des filtres à matériau filtrant granulaire, lavés simultanément à l'eau et à l'air, tels que ceux utilisés notamment dans le traitement de l'eau, et la récupération des particules de matériau filtrant granulaire entraînées par l'eau pendant le lavage, qui comprend :
- un organe calibré (11) de collecte et d'évacuation de l'eau sale ;
- des cloisons internes et externes (10, 10a - 20, 20a) placées de part et d'autre de l'organe de collecte, délimitant à l'intérieur des cloisons internes une zone de récupération de l'eau, et entre les cloisons internes et externes, des zones de tranquillisation de l'écoulement favorisant la séparation, par décantation à co-courant descendant, des particules de matériau granulaire et de l'eau sale à évacuer, et
- un déflecteur (13) destiné à éviter la perturbation des zones précédentes par le mélange triphasique eau-air-matériau granulaire formé au cours du lavage, placé sous lesdites zones, caractérisé en ce que les cloisons internes (10, 10a) délimitent une chambre d'évacuation de l'eau sale issue du lavage du filtre, ouverte à sa partie inférieure pour le passage de l'eau sale après décantation, en vue de sa récupération pour son évacuation, et en ce que ledit déflecteur (13) est positionné en dessous et en regard de l'ouverture délimitée entre lesdites cloisons internes.

2. Dispositif suivant la revendication 1, caractérisé en ce que l'organe de collecte de l'eau de lavage est constitué par un tube (11) muni d'orifices calibrés (12).

3. Dispositif suivant la revendication 1, caractérisé en ce que l'organe de collecte de l'eau de lavage est constitué par une goulotte ouverte (11) dont les bords supérieurs (18) sont à un niveau plus élevé que les cloisons internes et externes.

4. Dispositif suivant la revendication 2, caractérisé en ce que le calibrage des orifices (12) du tube de reprise (11) est choisi de façon à ce que, lors de l'opération de rinçage à l'eau seule à grand débit, grâce à la perte de charge déterminée par ces orifices calibrés se traduisant par une élévation du niveau de l'eau se trouvant dans le filtre, l'eau sale est évacuée directement par un déversoir (17).

5. Dispositif suivant la revendication 2, caractérisé en ce que le calibrage des orifices (12) de la goulotte de collecte (11) est choisi de façon à ce que, lors de l'opération de rinçage à l'eau seule à grand débit, grâce à la perte de charge déterminée par ces orifices calibrés se traduisant par une élévation du niveau de l'eau se trouvant dans le filtre, l'eau sale est évacuée directement par les bords supérieurs (18) de la goulotte, faisant office de déversoirs.

6. Dispositif suivant la revendication 1, caractérisé en ce que l'organe de décantation comporte deux parois internes (10, 10a), placées symétriquement de part et d'autre d'un plan médian vertical passant par l'axe de l'organe de collecte (11), délimitant entre elles une zone non perturbée ouverte vers le bas, favorisant le retour du matériau granulaire vers le milieu filtrant tandis que l'eau est évacuée par ladite ouverture vers l'organe (11), et une ou plusieurs parois externes tranquillisatrices (20, 20a) associées aux parois internes et constituant avec ces dernières des zones de séparation à co-courant descendant.

7. Dispositif suivant la revendication 6, caractérisé en ce que les espaces existant entre les parois internes et externes sont cloisonnés par des tubes, des lames, des cloisons en forme de nid d'abeille ou tout autre dispositif approprié pour réduire le diamètre hydraulique, et donc la turbulence.

8. Dispositif suivant l'une quelconque des revendications 6 et 7, caractérisé en ce que les parois externes sont des plaques parallèles à la partie oblique des parois internes.

9. Dispositif suivant la revendication 1, caractérisé en ce que le déflecteur 13 est placé sur le trajet du mélange triphasique, au front des zones de séparation à co-courant descendant, pour écarter les bulles d'air de cette zone et leur permettre de s'échapper vers la surface du filtre.

10. Dispositif suivant la revendication 9, caractérisé en ce que le déflecteur (13) est constitué par un tube à section polygonale, orienté de façon à ce que ses arrêtes produisent la déviation des bulles d'air.

## Claims

1. Device intended for performing the evacuation of washing water from filters filled with granular filtering material, and washed with a water-air mixture, such as those used notably in the treatment of water, and for recovering the particles of granular filtering material entrained by the water during the washing, which device comprises:
- a calibrated element (11) for collecting and discharging the dirty water;
- internal and external partitions (10, 10a - 20, 20a) situated on either side of the collecting element, and defining within the internal partitions a recovery zone for the water and, between the internal and external partitions, stilling zones for the flow promoting separation, by settlement with descending current, of the granular material particles and of the dirty water to be evacuated, and
- a deflector (13) intended for preventing perturbation of the foregoing zones by the three-phase mixture of water-air-granular material formed during the washing, the deflector being situated beneath said zones, characterized in that the internal partitions (10, 10a) define a discharge chamber for the dirty water issuing from the washing of the filter, the chamber being open at its lower part for the passage of the dirty water after settling, for the purpose of recovering it in order to discharge it, and in that said deflector (13) is positioned beneath and opposite to the opening defined between said internal partitions.

2. Device according to Claim 1, characterized in that the collecting element for the washing water is composed of a tube (11) provided with calibrated orifices (12).

3. Device according to Claim 1, characterized in that the collecting element for the washing water is composed of an open channel (11), of which the upper edges (18) are at a level higher than the internal and external partitions.

4. Device according to Claim 2, characterized in that the calibration of the orifices (12) of the collecting tube (11) is chosen in such a manner that, during the operation of rinsing with water only at a high flow rate, as a result of the loss of head caused by these calibrated orifices resulting in a rise in the level of the water situated in the filter, the dirty water is evacuated directly by an overflow (17).

5. Device according to Claim 2, characterized in that the calibration of the orifices (12) of the collecting channel (11) is chosen in such a manner that, during the operation of rinsing with water only at a high flow rate, as a result of the loss of head caused by these calibrated orifices leading to a rise in the level of the water in the filter, the dirty water is evacuated directly over the upper edges (18) of the channel, fulfilling the function of overflows.

6. Device according to Claim 1, characterized in that the settling element comprises two internal walls (10, 10a), situated symmetrically on either side of a vertical median plane passing through the axis of the collecting element (11) and defining between them a non-perturbed, downwardly open zone, promoting the return of the granular material towards the filtering medium while the water is evacuated through said opening towards the element (11), and one or more external stilling walls (20, 20a), associated with the internal walls and constituting with them separation zones with descending flow.

7. Device according to Claim 6, characterized in that the spaces between the internal and external walls are partitioned by tubes, strips, partitions in the form of honeycombs or any other appropriate device for reducing the hydraulic diameter and therefore the turbulence.

8. Device according to any one of Claims 6 and 7, characterized in that the external walls are plates parallel to the inclined part of the internal walls.

9. Device according to Claim 1, characterized in that the deflector (13) is situated on the path of the three-phase mixture, facing the separation zones with descending current, for removing the air bubbles from this zone and allowing them to escape towards the surface of the filter.

10. Device according to Claim 9, characterized in that the deflector (13) is constituted of a tube of polygonal section, orientated in such a way that its arrises create the deviation of the air bubbles.

## Patentansprüche

1. Vorrichtung zum Abführen von Waschwasser aus Filtern mit körnigem Filtermaterial, die gleichzeitig mit Wasser und Luft gewaschen werden, wie insbesondere die zur Wasserbehandlung verwendeten Filter, und zur Rückgewinnung von während des Waschens vom Wasser mitgerissenen Partikeln aus körnigem Filtermaterial, die aufweist
- ein kalibriertes Mittel (11) zum Sammeln und Abführen des schmutzigen Wassers,
- innere und äußere Trennwände (10,10a-20,20a), die beidseits des Mittels zum Sammeln angeordnet sind und innerhalb der inneren Trennwände einen Bereich zur Rückgewinnung des Wassers und zwischen den inneren und äußeren Trennwänden Bereiche zur Beruhigung des Abflusses begrenzen, die die Trennung der Partikel aus körnigem Material und des abzuführenden schmutzigen Wassers durch Dekantieren im abwärts gerichteten Co-Strom erleichtern, und
- einen Deflektor (13) zum Vermeiden der Perturbation der vorstehend genannten Bereiche durch die aus drei Phasen bestehende und im Verlauf des Waschens gebildete Mischung Wasser-Luft-körniges Material, der unterhalb der Bereiche angeordnet ist,
dadurch **gekennzeichnet**,
daß die inneren Trennwände (10,10a) eine Kammer zur Abführung des aus der Filterwaschung hervorgegangenen Schmutzwassers begrenzen, die in ihrem unteren Bereich zum Durchfluß des Schmutzwassers nach dem Dekantieren offen ist, damit dieses rückgewonnen und abgeführt werden kann, und
daß der Deflektor (13) unter und gegenüber der von den inneren Trennwänden begrenzten Öffnung angeordnet ist.

2. Vorrichtung nach Anspruch 1,
dadurch **gekennzeichnet**,
daß das Mittel zum Sammeln des Waschwassers aus einem Rohr (11) besteht, das mit kalibrierten Öffnungen (12) versehen ist.

3. Vorrichtung nach Anspruch 1,
dadurch **gekennzeichnet**,
daß das Mittel zum Sammeln des Waschwassers aus einer offenen Wasserablaufrinne (11) gebildet ist, deren obere Ränder (18) sich auf einer Höhe befinden, die über der Höhe der inneren und äußeren Trennwände liegt.

4. Vorrichtung nach Anspruch 2,
dadurch **gekennzeichnet**,
daß die Öffnungen (12) des Aufnahmerohres (11) derart kalibriert sind, daß das schmutzige Wasser beim Spülen nur mit Wasser in großem Durchsatz aufgrund des durch diese kalibrierten Öffnungen bestimmten Druckverlustes, der zu einer Erhöhung des Pegels des sich im Filter befindenden Wassers führt, direkt über einen Überlauf (17) abgeführt wird.

5. Vorrichtung nach Anspruch 2,
dadurch **gekennzeichnet**,
die Öffnungen (12) der Wassersammelrinne (11) derart kalibriert sind, daß das schmutzige Wasser beim Spülen nur mit Wasser in großem Durchsatz aufgrund des durch diese kalibrierten Öffnungen bestimmten Druckverlustes, der zu einer Erhöhung des Pegels des sich im Filter befindenden Wassers führt, direkt über die als Überlauf dienenden oberen Ränder (18) der Wassersammelrinne abgeführt wird.

6. Vorrichtung nach Anspruch 1,
dadurch **gekennzeichnet**,
daß das Mittel zum Dekantieren zwei Innenwände (10,10a) aufweist, die symmetrisch beidseits einer vertikalen, durch die Achse des Mittels zum Sammeln (11) gehenden Mittelebene angeordnet sind und zwischen sich einen nicht gestörten, nach unten offenen Bereich begrenzen, der den Rücklauf des körnigen Materials zum Filtermedium fördert, während das Wasser durch diese Öffnung zum Mittel (11) abgeführt wird, und daß das Mittel zum Dekantieren eine oder mehrere äußere strömungsberuhigende Wände (20,20a) aufweist, die den inneren Wänden zugeordnet sind und mit letzteren Bereiche zur Trennung im abwärts gerichteten Co-Strom bilden.

7. Vorrichtung nach Anspruch 6,
dadurch **gekennzeichnet**,
daß die Räume zwischen den inneren und äußeren Wänden durch Rohre, dünne Streifen, wabenförmige Trennwände oder beliebige andere Vorrichtungen abgetrennt sind, die zur Reduzierung des hydraulischen Durchmessers und damit der Turbulenz geeignet sind.

8. Vorrichtung nach Anspruch 6 oder 7,
dadurch **gekennzeichnet**,
daß die äußeren Wände Platten sind, die parallel zum schrägen Teil der inneren Wände sind.

9. Vorrichtung nach Anspruch 1,
dadurch **gekennzeichnet**,
daß der Deflektor (13) auf der Wegstrecke der dreiphasigen Mischung vor den Bereichen zur Trennung im abwärts gerichteten Co-Strom angeordnet ist, um die Luftblasen aus diesem Bereich zu entfernen und ihnen zu ermöglichen, zur Oberfläche des Filters hin zu entweichen.

10. Vorrichtung nach Anspruch 9,
dadurch **gekennzeichnet**,
daß der Deflektor (13) aus einem Rohr mit polygonalem Querschnitt gebildet ist, das so angeordnet ist, daß seine Kanten zu einer Ablenkung der Luftblasen führen.
